# EUROPÄISCHE PATENTSCHRIFT

(11) **EP 1 113 717 B1**
(45) Veröffentlichungstag und Bekanntmachung des Hinweises auf die Patenterteilung: **26.02.2003**
(21) Anmeldenummer: 99946179.1
(22) Anmeldetag: 16.09.1999
(51) Int. Cl.: A01K 1/01, A01C 3/00, C05F 3/00

(54) **VERFAHREN ZUR ENTSORGUNG VON EXKREMENTEN VON IN EINEM STALL GEHALTENEN TIEREN UND EINRICHTUNG ZUR DURCHFÜHRUNG DES VERFAHRENS**
METHOD FOR DISPOSAL OF EXCREMENTS OF ANIMALS KEPT IN A STABLE AND DEVICE FOR IMPLEMENTING SAID METHOD
PROCEDE ET DISPOSITIF PERMETTANT D'EVACUER LES EXCREMENTS D'ANIMAUX EN ETABLE

(30) Priorität: 16.09.1998 DE 29816589 U; 12.03.1999 DE 19910993
(43) Veröffentlichungstag der Anmeldung: 11.07.2001
(73) Patentinhaber: Schulze Wettendorf, Christoph, 48356 Nordwalde (DE)
(72) Erfinder: Schulze Wettendorf, Christoph, 48356 Nordwalde (DE)
(74) Vertreter: Schulze Horn & Partner
(86) Internationale Anmeldenummer: EP9906851
(87) Internationale Veröffentlichungsnummer: WO00015027

(56) Entgegenhaltungen:
- EP-A- 0 227 155
- EP-A- 0 498 084
- EP-A- 0 850 561
- GB-A- 1 434 281
- NL-A- 9 101 388

## Beschreibung

Die vorliegende Erfindung betrifft ein Verfahren zur Entsorgung von aus Kot und Harn bestehenden Exkrementen von in einem Stall gehaltenen Tieren, insbesondere Schweine, nach dem Oberbegriff des Anspruchs 1. Weiterhin betrifft die Erfindung eine Einrichtung zur Durchführung des Verfahrens gemäß dem Oberbegriff des Anspruchs 15.

In der Praxis weit verbreitet und von daher allgemein bekannt sind Ställe, deren Bodenfläche ganz oder teilweise für Exkremente durchlässig ausgeführt ist, z.B. als Spaltenboden, wobei unter dem durchlässigen Boden ein Güllekanal zur Sammlung und gemeinsamen Abführung von Kot und Harn vorgesehen ist. Der Güllekanal hat ein relativ großes Fassungsvermögen, weil er nicht nur zur Sammlung sondern auch zur Speicherung von Kot und Harn, also Gülle, dient. Von Zeit zu Zeit wird der Güllekanal geleert, wobei dann die Gülle entweder in einen Güllebehälter außerhalb des Stalls oder in ein Transportfahrzeug zwecks Ausbringung auf einer Ackerfläche gepumpt wird. Nachteilig entsteht sowohl im Stall während der Sammlung und Speicherung der Gülle als auch in der Umgebung des Güllebehälters oder einer mit Gülle gedüngten Ackerfläche eine erhebliche Umweltbelastung durch die Bildung und Verbreitung von Ammoniak und Methangas. Insbesondere entstehen unangenehme Gerüche, die von den meisten Betroffenen als starke Belästigung empfunden werden und die auch das Befinden der im Stall gehaltenen Tiere beeinträchtigen. Um die im Stall gehaltenen Tiere nicht zu schädigen, ist ein intensiver Luftaustausch erforderlich, der mittels Ventilatoren erfolgt, für die eine erhebliche elektrische Energie eingesetzt werden muß. Dieser intensive Luftaustausch führt aber außerhalb des Stalls wieder zu einem erhöhten Schadgasausstoß.

Eine teilweise Reduzierung der oben dargelegten Nachteile, insbesondere der im Inneren des Stalls auftretenden Nachteile, kann durch mechanische Reinigungseinrichtungen erzielt werden, wie sie beispielsweise aus der DE 43 12 128 A1 oder der DE 21 27 370 A1 bekannt sind. Mit diesen bekannten Reinigungsvorrichtungen werden Kot und Harn gemeinsam von einer Absetzfläche in einen Gülle-Sammelbereich transportiert, so daß innerhalb des Stalls eine verminderte Belastung erreicht wird. Allerdings fällt auch hier immer noch die Umweltbelastung außerhalb des Stalls durch in einem Behälter gespeicherte Gülle und durch auf Ackerflächen als Dünger ausgebrachte Gülle in unvermindertem Umfang an.

Aus der DD-PS 142 287 ist ein Verfahren zur fraktionierten mechanischen Gülleabführung in Tierställen, insbesondere für Kälberställe, bekannt. Dieses Verfahren ist dadurch gekennzeichnet, daß vorzugsweise ein möglichst über den gesamten Tierplatz reichender perforierter Fußboden mit großem Lochanteil und eine quer zur Tierstandreihe geneigte Kotfläche mit Harnrinne unter diesem perforierten Fußboden und ein in Abteilungen geteilter Schieber mit langsamem Vorschub sowie mit getrennten Abwurfschächten für die feste und flüssige Phase am Ende der Standreihe mit Anschluß an getrennte Vorratsbehälter kombiniert werden. Über die getrennte Abführung und Lagerung von Kot und Harn hinaus liefert dieser Stand der Technik aber keine Anregungen, ob und in welcher Weise eine Weiterbehandlung von Kot und/oder Harn erfolgen soll.

Aus der EP 0 850 561 A1 ist ein Verfahren nach dem Oberbegriff des Patentanspruchs 1 und eine Vorrichtung nach dem Oberbegriff des Patentanspruchs 15 bekannt. Wesentlich ist bei diesem Verfahren hinsichtlich der Behandlung des Harns vorgesehen, daß dieser mit einer Säure, z.B. Schwefelsäure, versetzt wird, bis ein pH-Wert von etwa 6 erreicht ist. Hierdurch soll eine unerwünschte Ammoniakbildung unterbunden werden. Weiter ist vorgesehen, daß der Harn durch Verdampfung konzentriert wird. Hinsichtlich des Kots sieht dieses bekannte Verfahren vor, daß er nach einer Trocknung auf einen Feststoffgehalt von vorzugsweise etwa 40% kompostiert wird. Außer dem vorgetrockneten Kot sollen der zu kompostierenden Masse die aus dem Harn durch Absetzen abgetrennten Feststoffe sowie der nach der Verdampfung vorliegende konzentrierte Harn zugefügt werden. Als Endprodukte sollen dann Luft, Wasser und Kompost übrig bleiben. Als nachteilig wird hierbei angesehen, daß der entstehende Kompost in seiner Zusmamensetzung nicht definiert ist, so daß auch keine bestimmten Nährstoffgehalte oder sonstige Eigenschaften gleichbleibend erzielt werden. Bei der Kompostierung werden wertvolle organische Stoffe mineralisiert, so daß sie für die Bodenbiologie bei späterer Ausbringung des Komposts nicht mehr zur Verfügung stehen. Weiterhin ist nachteilig, daß für die Unterbindung der Ammoniakbildung Säure erforderlich ist. Hierdurch tritt eine Erhöhung des Gehalts an dem der Säure entsprechenden Salz, bei Verwendung von Schwefelsäure Sulfat, auf, was unerwünscht und in vielen Fällen schädlich ist. Schließlich ist noch zu befürchten, daß sich bei der Kreislaufführung des Verfahrens die Säure und das Schadgas Ammoniak so aufkonzentrieren, daß die Biologie bei der Kompostierung und innerhalb des als Filter dienenden Biobeetes zerstört wird, wodurch das Verfahren nicht mehr in gewünschter Weise ablaufen kann.

Aus der EP 0 227 155 A2 ist es bekannt, innerhalb eines Stalls Harn und Kot zu trennen. Hierfür wird in diesem Fall allerdings eine aufwendige Filtereinrichtung eingesetzt, die in Form eines Filtertischs unter einem Spaltenboden angeordnet ist. Die Oberfläche der Filtereinrichtung wird durch ein für den Harn durchlässiges und für den Kot undurchlässiges Material, z.B. ein Filtersieb oder eine Schaumstofffläche gebildet. Der oberseitig abgelagerte Kot soll periodisch von der Oberfläche der Filtereinrichtung abgeschoben werden; der Harn tritt durch die Filtereinrichtung hindurch in eine Abführleitung. Nachteilig ist hier der Aufwand für die Trennung von Harn und Kot sehr groß, was hohe Investitionen im Stall erfordert und was einen hohen Wartungsaufwand zur Folge hat. Hinsichtlich der Weiterbehandlung des Urins liefert diese Schrift keine Hinweise; für den Kot ist eine Lagerung oder eine Trocknung und Pelletierung vorgesehen, ohne daß Hinweise gegeben werden, zu welchen Zwecken der Kot danach verwendet werden soll.

Schließlich ist aus der NL 91 01 388 A eine Vorrichtung zur Trennung von Harn und Kot in einem Stall bekannt. Diese Vorrichtung besteht aus einem über eine geneigte Fläche verfahrbaren Schieber, der die festen Bestandteile von Zeit zu Zeit in einen dafür vorgesehenen Sammelbehälter abschiebt; die flüssigen Bestandteile sollen unter Schwerkraftwirkung in eine Abführrinne fließen und von dort in einen getrennten eigenen Sammelbehälter. Der Kot soll anschließend mittels Transportfahrzeugen in solche Gebiete transportiert werden, wo noch Bedarf an Düngung besteht. Der hier erzielte Vorteil wird darin gesehen, daß der Kot im Verhältnis zu Gülle einen geringeren Wassergehalt hat, wodurch das Transportvolumen und damit auch die Transportkosten kleiner werden. Eine Weiterbehandlung des Kots oder des Harns nach der Trennung ist hier nicht vorgesehen.

Für die vorliegende Erfindung stellt sich deshalb die Aufgabe, ein Verfahren und eine Einrichtung zur Durchführung des Verfahrens der eingangs genannten Art zu schaffen, die die dargelegten Nachteile vermeiden und mit denen eine verbesserte, insbesondere tier- und umweltfreundlichere Entsorgung der Exkremente erreicht wird.

Im Hinblick auf das Verfahren gelingt die Lösung der gestellten Aufgabe durch ein Verfahren gemäß dem Oberbegriff des Patentanspruchs 1, das dadurch gekennzeichnet ist, daß die Trocknung des Kots auf einen eine Zersetzung unterbindenden Feuchtegehalt erfolgt, bei dem der Kot lager- und transportfähig ist.

Kot und Harn werden getrennt voneinander in einem noch frischen Zustand vor Beginn einer Zersetzung aus dem Stall abgeführt, so daß im Stall keine Belastung durch darin gespeicherte und länger gelagerte Exkremente und deren Zersetzungsprodukte auftreten kann. Weiter ist erfindungswesentlich eine so weitgehende Trocknung des Kots vorgesehen, daß der Kot daran gehindert wird, umweltschädliche Eigenschaften infolge von Zersetzung zu entwickeln. Auch eine biologisch-chemische Umsetzung des Kots im Wege einer Kompostierung kann und soll hier nicht mehr stattfinden. Zugleich sorgt diese weitgehende Trocknung dafür, den Kot nutzbringend verwertbar zu machen, z.B. als Dünger oder Brennstoff. Da der aus dem Stall abgeförderte frische Kot schon durch die sofortige Trennung von dem Harn einen relativ geringen Feuchtegehalt hat, ist es mit vertretbarem Energieaufwand möglich, den Kot so weit zu trocknen, daß eine Zersetzung nicht mehr erfolgt, ihn also auf einen so niedrigen Feuchtegehalt zu bringen, bei dem praktisch alle biologisch-chemischen Prozesse im Kot zum Erliegen kommen. Die Trocknungstemperatur kann dabei relativ niedrig sein, sodaß Abwärmenutzung für die Trocknung möglich ist; außerdem soll die Trocknungstemperatur unter 60°C bleiben, um eine unerwünschte temperaturbedingte Zersetzung zu vermeiden. In seinem getrockneten Zustand ist der Kot lager- und transportfähig, weil mangels Flüssigkeit im Kot keine bakterielle Zersetzung mehr erfolgen kann und weil dann auch kaum noch unangenehme Gerüche entstehen können.

Der Harn muß nach seiner Abführung aus dem Stall nicht unbedingt noch weiterbehandelt werden, weil zwischen 85 und 99% aller Nährstoffe und Salze im Feststoff, also im Kot, verbleiben. Der Harn kann und darf deshalb direkt auf landwirtschaftliche Flächen ausgebracht oder als Abwasser abgeleitet werden.

Mit dem erfindungsgemäßen Verfahren wird eine drastische Reduzierung des Ammoniak-Gehalts in der Stalluft erreicht, so daß die Ventilation innerhalb des Stalls entsprechend reduziert werden kann. Außerdem wird die schädliche Bildung von Methangas im Stall ausgeschlossen. Die Zahl der Keime in der Stalluft wird drastisch reduziert, weil durch die getrennte Abführung von Kot und Harn in frischem Zustand keine bakterielle Zersetzung innerhalb des Stalls eintreten kann. Der abgeführte Harn zersetzt sich im Gegensatz zu Gülle nicht, weil die im Harn noch enthaltenen Bakterien keine ausreichende Nährstoffmenge mehr vorfinden. Dadurch kann eine Umwandlung des im Harn enthaltenen Harnstoffs zu Ammoniak nicht mehr auftreten.

Die Weiterbehandlung des Kots und ggf. des Harns kann verzögert unter Einschluß einer Zwischenspeicherung oder unmittelbar erfolgen. Die Auswahl richtet sich hier insbesondere nach den anfallenden und zu verarbeitenden Mengen von Harn und Kot sowie danach, ob die jeweilige Weiterbehandlungseinrichtung besser kontinuierlich oder chargenweise betreibbar ist.

Eine bevorzugte Weiterbildung des Verfahrens sieht vor, daß die Trocknung des Kots zunächst nur bis zu einem Feuchtegehalt zwischen etwa 10 und 25 Gew.-% erfolgt und daß dann der Kot unter weiterer Feuchtereduzierung zu Preßlingen mit einem eine Zersetzung unterbindenden Rest-Feuchtegehalt gepreßt wird. Das Pressen des Kots zu Preßlingen sorgt zwangsläufig für eine Feuchtereduzierung, da durch den ausgeübten Preßdruck ein großer Teil der zuvor noch enthaltenen Feuchtigkeit ausgepreßt wird, ohne daß dafür ein besonderer Trocknungsschritt erforderlich wäre. Die vorhergehende Trocknung kann sich deshalb auf die angegebene unvollständige Trocknung beschränken, was den Aufwand für die vorhergehende Trocknung, insbesondere den Energieaufwand, begrenzt. Außerdem ist der zu Preßlingen gepreßte Kot im Vergleich zu pulverförmigem getrockneten Kot einfach handhabbar und leicht lagerbar und transportierbar, was die weitere Nutzung des trockenen Kots wesentlich verbessert und vereinfacht.

Die Verfahrensausgestaltung nach Anspruch 3 nennt eine bevorzugte Methode für die Trennung von Kot und Harn, die vorteilhaft einen geringen Aufwand erfordert und gleichzeitig einen hohen Trennungsgrad gewährleistet.

Bevorzugt wird weiterhin der getrocknete Kot beim Pressen zu Preßlingen in zweckentsprechender Größe gepreßt, vorzugsweise pelletiert oder brikettiert. In dieser Form ist der Trockenkot z.B. in Säcken oder anderen Transportbehältnissen abpackbar und leicht transportierbar. Da das Volumen des Trockenkots im Vergleich zu bisher anfallenden Güllemengen sehr gering ist, läßt sich der Trockenkot auch wirtschaftlich lagern sowie über größere Strecken transportieren, so daß er mit vertretbarem Aufwand auch in weiter entfernt liegende Gegenden gebracht werden kann.

Als zusätzliche Maßnahme gegen eine Keimbildung im Kot oder zur Abtötung von ggf. infolge von Tierkrankheiten im Kot befindlichen Keimen kann dieser vor dem Trocknen oder vor oder nach dem Pressen mit einem trockenen, pulverförmigen Entkeimungsmittel versetzt oder umhüllt werden. Als Entkeimungsmittel kann beispielsweise Calciumhydroxid oder Calciumoxid eingesetzt werden.

Vorteilhaft können die Kot-Preßlinge als Dünger eingesetzt werden, z.B. für Ackerflächen oder Grünland sowie im Garten- und Gemüsebau. Da keine Zersetzung im Trockenkot mehr stattfindet, stellt eine längere Lagerzeit kein Problem mehr dar; alle Nährstoffe im Trockenkot bleiben voll erhalten. Vorteilhaft ist auch, daß der Trockenkot einen neutralen pH-Wert um 7 aufweist, sodaß seine Ausbringung nicht zur Versauerung von Böden beiträgt. Alternativ besteht auch die Möglichkeit, die Kot-Preßlinge als Brennstoff einzusetzen. Die Kot-Preßlinge erreichen einen Heizwert von über 5000 kcal, der etwa dem von getrocknetem Eichenholz entspricht. Da der Schadstoffgehalt, insbesondere der Schwermetallgehalt, der Kot-Preßlinge sehr gering ist, ist auch eine entsprechend saubere Verbrennung mit schadstoffarmen Abgasen erreichbar. Als Haupt-Verbrennungsprodukte fallen lediglich Kohlendioxid und Wasser an.

Im Hinblick auf den anfallenden Harn ist bevorzugt vorgesehen, daß dieser nach seiner Abführung aus dem Stall unbehandelt oder nach einer Weiterbehandlung zur Bewässerung mit einem leichten Düngeeffekt eingesetzt wird. Wegen des relativ geringen Gehaltes des Harn an Nährstoffen und Salzen ist eine Überdüngung durch Ausbringung des Harns oder eine Schädigung von Oberflächengewässern und Grundwasser nicht zu befürchten. Damit kann der Harn teilweise Frischwasser, das zur Bewässerung eingesetzt wird und entsprechend teuer ist, ersetzen.

Im Hinblick auf die Weiterbehandlung des Harns ist bevorzugt vorgesehen, daß diese durch Oxidation und/oder Desinfektion erfolgt. Durch die Oxidation wird insbesondere ein Abbau von noch im Harn enthaltenen organischen Bestandteilen erreicht, die aus geringen Anteilen von Kot bestehen, die trotz der Trennung noch in den Harn gelangen können. Die Desinfektion sorgt dafür, daß eine Zersetzung unter Entstehung von Ammoniak oder sonstigen Zersetzungsstoffen, die umweltschädlich und übelriechend sind, nicht mehr stattfindet.

Alternativ oder ergänzend kann die Weiterbehandlung des Harns durch eine ein- oder mehrstufige mechanische oder mechanisch-biologische Klärung erfolgen. In einer solchen Klärung erfolgt zweckmäßig zunächst ein Absetzen von Feststoffen, wodurch der Harn von Nährstoffen für Mikroorganismen befreit wird. Dies kann im einfachsten Fall schon durch ein Zwei- oder Drei-Kammersystem erreicht werden.

Weiterhin kann die Weiterbehandlung des Harns durch Verdampfen seines Flüssigkeitsanteils und gegebenenfalls Trocknen der verbleibenden Festsubstanzen erfolgen. Hierbei entsteht auf der einen Seite im wesentlichen Wasserdampf, der ohne die Gefahr von Umweltschäden in die Luft entlassen werden kann, und auf der anderen Seite eine verbleibende Festsubstanz, die entweder als "Schlamm" weiterverwendet werden kann, z.B. auch als Dünger, oder die, wie oben für den Kot erläutert, ebenfalls getrocknet und dann ebenso wie der getrocknete Kot weiterverwendet werden kann.

Um das Verfahren möglichst kostengünstig ausführen zu können, ist bevorzugt vorgesehen, daß zur Trocknung des Kots und/oder zur Verdampfung des Flüssigkeitsanteils des Harns und/oder für eine Vorwärmung von dem Stall zuzuführender Frischluft Wärmeenergie aus durch Tier-Körperwärme erwärmter Stall-Abluft verwendet wird. Die in einem Stall gehaltenen Tiere stellen eine Wärmeenergiequelle dar, die ständig einen Wärmeüberschuß produziert. Diese Wärme wurde bisher bei üblichen Ställen einfach mit der Ventilationsluft in die Umwelt geblasen, ohne daß ein Nutzen aus der Wärmeenergie gezogen wurde. Mit der vorliegenden Erfindung wird die Wärmeenergie der Stall-Abluft sinnvoll eingesetzt, wobei eventuell fehlende Wärmeenergie durch andere Energielieferanten bei Bedarf zugeführt werden kann, z.B. mittels Verbrennung von Trockenkot-Preßlingen oder von herkömmlichen flüssigen, gasförmigen oder festen Brennstoffen oder durch elektrische Energie.

Um mögliche Geruchs- und Staubbelästigungen durch Abluft zu vermeiden, wird weiter vorgeschlagen, daß bei der Trocknung und/oder bei der Verdampfung anfallende Abluft durch mindestens ein Gerüche und/oder Stäube verminderndes oder beseitigendes Filter geleitet und in die Atmosphäre entlassen wird.

Weiter schlägt die Erfindung vor, daß zumindest ein Teilstrom der Stall-Abluft vor oder nach ihrer Verwendung
zur Trocknung des Kots und/oder zur Verdampfung des Flüssigkeitsanteils des Harns desinfiziert und dann unmittelbar zur Belüftung des Harns zwecks dessen Oxidation und/ oder Desinfektion eingesetzt wird. Der desinfizierte Luftstrom hat selbst eine zumindest oxidierende und, sofern in dem Luftstrom noch desinfizierende Substanzen enthalten sind, auch eine desinfizierende Wirkung auf den damit belüfteten Harn.

Bevorzugt erfolgt die Desinfektion durch Bestrahlung des Harns und/oder der Stall-Abluft mit UV-Strahlung oder Gamma-Strahlung. Neben einer Desinfektion wird durch die genannten Strahlungen gleichzeitig eine Zerstörung von organischen Molekülen erreicht, so daß auf diesem Wege z.B. auch Antibiotika zerstört werden können. Bei Bestrahlung der Abluft mit UV-Strahlung entsteht Ozon, das eine desinfizierende Wirkung hat und mit dem dann beispielsweise auch die Belüftung des Harns und dessen gleichzeitige Desinfektion erfolgen kann.

Insgesamt wird mit dem erfindungsgemäßen Verfahren und seinen Ausgestaltungen eine wirksame Entlastung der Umwelt im Hinblick auf Boden und Wasser erreicht. Da keine Gülle mehr gespeichert und ausgebracht werden muß, gelangen auch keine überschüssigen Nitrate mehr in den Boden und in das Oberflächenwasser. Der Nährstoffgehalt der Exkremente befindet sich zu etwa 85 bis 99% im Kot und dem daraus hergestellten Trockenkot. Damit ist nun im Gegensatz zur Ausbringung von Gülle eine gezielte, insbesondere bedarfsgerechte und zeitgerechte Düngung möglich. Die bisherigen, als belastend einzustufenden Quellen von Ammoniak, nämlich Stallungen, Güllebehälter und Gülleausbringungsflächen, werden mit dem erfindungsgemäßen Verfahren nahezu vollständig von ihren schädlichen Eigenschaften befreit.

Zur Lösung des zweiten Teils der Aufgabe wird eine Einrichtung zur Durchführung des Verfahrens gemäß dem Oberbegriff des Anspruchs 15 vorgeschlagen, die dadurch gekennzeichnet ist, daß die Vorrichtung zur Trocknung des Kots eine den Kot auf einen eine Zersetzung unterbindenden Feuchtegehalt, bei dem der Kot lager- und transportfähig ist, trocknende Trocknungsvorrichtung ist.

Mit einer so ausgeführten Einrichtung läßt sich das oben erläuterte Verfahren gemäß der Erfindung grundsätzlich ausführen, so daß die oben im Zusammenhang mit dem Verfahren erläuterten Vorteile erreicht werden, die sich aus der erfindungswesentlichen weitgehenden Trocknung des Kots ergeben.

Bevorzugt umfaßt die Kot-Weiterbehandlungseinrichtung weiterhin eine Preßvorrichtung zur Erzeugung von Kotpreßlingen mit einem eine Zersetzung unterbindenden Rest-Feuchtegehalt aus in der Trocknungsvorrichtung zunächst nur auf einen Feuchtegehalt zwischen etwa 10 und 25 Gew.-% getrocknetem Kot. Die Preßvorrichtung sorgt zwangsläufig für eine Feuchtereduzierung innerhalb des Kots aufgrund des ausgeübten Preßdrucks, so daß zuvor in der Trocknungsvorrichtung eine weniger weitgehende Trocknung ausreichend ist, was Trocknungszeit und -energie spart.

Im Anspruch 17 ist als Weiterbildung der Einrichtung zur Durchführung des oben dargelegten Verfahrens eine Trenneinrichtung angegeben, die mit relativ geringem technischen Aufwand eine zuverlässige und weitestgehend vollständige Trennung der Exkremente in Harn einerseits und Kot andererseits bietet.

In weiterer Ausgestaltung ist bevorzugt vorgesehen, daß der Stall zumindest über einen Teil seiner Bodenfläche mit einem Spaltenboden ausgeführt ist, daß die Exkremente-Absetzfläche die Grundfläche eines unter dem Spaltenboden angeordneten Kanals ist und daß die Spalten des Spaltenbodens und die Richtung des Gefälles im wesentlichen parallel zueinander verlaufen. Diese Ausgestaltung der Einrichtung bietet insbesondere den Vorteil, daß die mechanische Kot-Abfördervorrichtung sich nicht in einem Bereich bewegt, in dem sich die Tiere aufhalten. Damit werden die Tiere durch die Abfördervorrichtung nicht gestört oder gefährdet. Durch die Parallel-Ausrichtung der Spalten des Spaltenbodens und der Richtung des Gefälles wird insbesondere erreicht, daß der auf der Absetzfläche abgesetzte Kot keine "Dämme" bilden kann, die ein Abfließen des Harns in den Harn-Sammelkanal behindern könnten. Vielmehr wird hier erreicht, daß der Harn zwischen dem in Richtung der Spalten abgesetzen Kot hindurch ohne Behinderung und ohne Mitnahme von Kot in den Harn-Sammelkanal strömt.

Für die Kot-Abfördervorrichtung sind verschiedene technische Lösungen möglich. Eine erste Lösung sieht vor, daß die Kot-Abfördervorrichtung durch einen vorzugsweise parallel zur Harn-Sammelrinne verfahrbaren Kot-Schieber gebildet ist.

Eine alternative Ausführung der Kot-Abfördervorrichtung sieht vor, daß die Absetzfläche als vorzugsweise parallel oder quer zum Harn-Sammelkanal verfahrbarer Förderer in Form eines oder mehrerer flexibler Förderbänder oder gelenkiger Plattenbänder ausgeführt ist. Das Förderoder Plattenband kann mit geschlossener oder durchbrochener Oberfläche ausgeführt sein; wenn Durchbrechungen vorgesehen sind, kann der Harn durch diese abfließen, während der Kot auf der Oberfläche verbleibt, sodaß bei dieser Ausführung auf das Gefälle der Absetzfläche verzichtet werden kann.

Mit allen Ausführungen der Kot-Abfördervorrichtung wird einerseits eine behinderungsfreie Ableitung des Harns in den Harn-Sammelkanal und andererseits eine davon getrennte Abförderung des Kots unter Fernhaltung vom Harn-Sammelkanal ermöglicht. In der Praxis genügt es, die Kot-Abfördervorrichtung im Abstand von einigen Stunden, beispielsweise etwa drei Stunden, in Betrieb zu setzen, um den in der Zwischenzeit angefallenen Kot abzufördern. In einer solchen Zeit bleibt der Kot frisch, d.h. es haben darin noch keine signifikanten Zersetzungsprozesse begonnen.

Weitere bevorzugte und vorteilhafte Ausgestaltungen und Weiterbildungen der Einrichtung zur Durchführung des Verfahrens sind in den Ansprüchen 21 bis 29 angegeben, wobei diese Ausgestaltungen der Einrichtung insbesondere die Durchführung der weiter oben erläuterten VerfahrensAusgestaltungen mit geeigneten technischen Mitteln gewährleisten.

Im folgenden werden je ein Beispiel des Verfahrens und der Vorrichtung zu dessen Durchführung anhand einer Zeichnung erläutert. Die Figuren zeigen:
- Figur 1: eine schematische Blockdarstellung eines Beispiels des Verfahrens,
- Figur 2: einen Stall mit einer Einrichtung zur Durchführung des Verfahrens, in einem Teil-Vertikalschnitt, und
- Figur 3: die Einrichtung gemäß Figur 2 in Draufsicht.

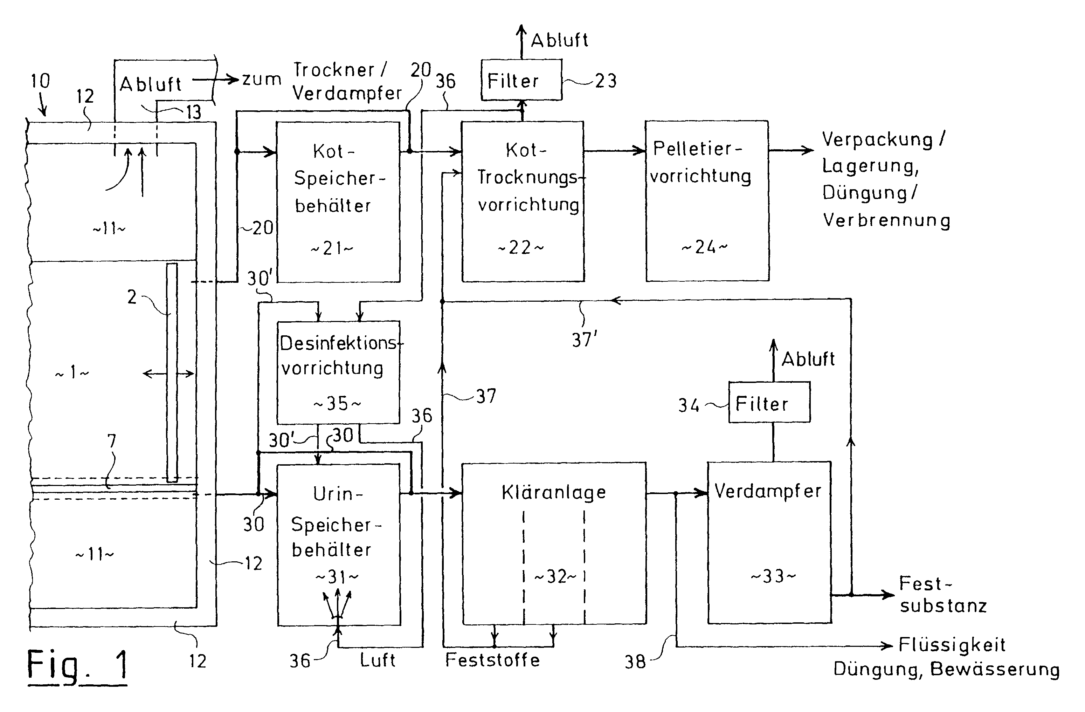

Figur 1 der Zeichnung zeigt links einen Teil eines Stalls 10, der von Wänden 12, vorzugsweise mit einer Wärmeisolation, umgeben ist. Im Inneren des Stalls 10 befinden sich Liegeflächen 11 sowie eine Exkremente-Absetzfläche 1. Die Absetzfläche 1 kann geringfügig vertieft zwischen den Liegeflächen 11 angeordnet sein oder auch in Form eines Unterflurkanals unterhalb eines hier aus Übersichtlichkeitsgründen nicht eingezeichneten Spaltenbodens liegen. Die Absetzfläche 1 besitzt ein Gefälle, das in der Figur 1 nach unten verläuft. Am unteren Rand der Absetzfläche 1 befindet sich ein Harn-Sammelkanal 7, in den der von im Stall 10 gehaltenen Tieren auf die Absetzfläche 1 abgelassene Harn unter Schwerkraftwirkung strömt. Das Gefälle der Absetzfläche 1 ist dabei maximal so groß, daß darauf von den Tieren abgesetzter Kot liegen bleibt und nicht in den Harn-Sammelkanal 7 rutscht. Zur Abförderung des Kots von der Absetzfläche 1 dient eine Kot-Abfördereinrichtung mit einem Kot-Schieber 2, der quer zum Sammelkanal 7 ausgerichtet ist und der in Richtung des Doppelpfeils parallel zum Sammelkanal 7 entlang der Absetzfläche 1 verfahrbar ist. Bei Bewegung des Schiebers 2 von links nach rechts wird der angefallene Kot durch eine Öffnung in der Wand 12 des Stalls 10 aus diesem abgefördert und gelangt in einen Kot-Abförderweg 20, der beispielsweise durch eine Förderschnecke oder ein Förderband gebildet ist. Damit der Kot bei seiner Abförderung aus dem Stall 10 noch frisch, d.h. in einem Zustand ohne bakterielle Zersetzung, ist, muß in bestimmten Zeitabständen der Schieber 2 betätigt werden, wobei hier in der Praxis beispielsweise eine Betätigung alle zwei bis vier, vorzugsweise etwa alle drei Stunden, ausreichend ist.

Der im Harn-Sammelkanal 7 gesammelte Harn fließt zweckmäßig unter natürlichem Gefälle durch den Kanal 7 in einen Harn-Abförderweg 30 oder 30', die zweckmäßig durch Rohrleitungen, gegebenenfalls mit einer hier nicht gezeichneten zwischengeschalteten Pumpe, gebildet sind.

Der frische, aus dem Stall 10 abgeförderte Kot gelangt über den Förderweg 20 entweder zunächst in einen Kot-Speicherbehälter 21 oder unmittelbar in eine Kot-Trocknungsvorrichtung 22. Im Kot-Speicherbehälter 21 ist bei Bedarf eine zeitlich begrenzte Zwischenspeicherung des frischen Kots möglich. Dabei ist die Speicherzeit durch die Zeit bis zum Beginn der Zersetzung des Kots begrenzt.

In der Kot-Trocknungsvorrichtung 22 wird der frische Kot bis auf einen vorgebbaren Rest-Feuchtegehalt getrocknet. Dabei ist, je nach der vorgesehenen weiteren Behandlung oder Verwendung des Kots, eine vollständige Trocknung, d.h. eine Trocknung auf einen eine Zersetzung unterbindenden geringen Rest-Feuchtegehalt, oder eine Vortrocknung auf einen noch etwas höheren Rest-Feuchtegehalt, der nachfolgend noch reduziert wird, möglich. Der vorgeschaltete Kot-Speicherbehälter 21 dient dabei insbesondere dazu, eine gleichmäßige Beschickung des Kottrockners 22 zu gewährleisten, was für dessen Funktion vorteilhaft ist. Wenn passende oder nur relativ geringe Kotmengen aus dem Stall 10 abgefördert werden, kann der Speicherbehälter 21 auch umgangen werden und der frische Kot direkt der Trocknungsvorrichtung 22 zugeführt werden, wobei eventuelle Fehlmengen aus dem Kot-Speicherbehälter 21 entnommen werden können. Die aus der Kot-Trocknungsvorrichtung 22 austretende Abluft, die die dem Kot entzogene Feuchtigkeit in Form von Wasserdampf mit sich führt, wird zur Vermeidung von Geruchsbelästigungen zweckmäßig durch einen Filter 23 geleitet. Der Filter 23 kann beispielsweise ein Biomassefilter und/oder ein Aktivkohlefilter sein.

Nach dem Trocknen, hier einem Vortrocknen, kann der Kot in einer nachgeschalteten Preßvorrichtung 24, z.B. eine Pelletiervorrichtung, zu Preßlingen, z.B. Pellets, gepreßt werden, wodurch dem schon vorgetrockneten Kot weitere Feuchtigkeit entzogen wird und wodurch der getrocknete Kot eine gut verarbeitbare und handhabbare Konsistenz erhält. Der Rest-Feuchtegehalt ist nach dem Pressen so niedrig, daß eine Zersetzung des Kots ausgeschlossen ist. In Form von Preßlingen kann der trockene Kot einer Verpackung und/oder Lagerung zugeführt werden, wonach dann die Preßlinge vorzugsweise als Dünger eingesetzt werden. Alternativ können die Preßlinge oder der nicht gepreßte getrocknete Kot auch als Brennstoff Verwendung finden, da sie einen ausreichend hohen Heizwert aufweisen.

Der aus dem Stall 10 abgeleitete Harn gelangt wahlweise über den Abführweg 30 unmittelbar in einen Harn-Speicherbehälter 31 oder wird über einen Abführweg 30' zusätzlich durch eine Desinfektionsvorrichtung 35 geleitet und dann dem Harnspeicher 31 zugeführt. Die Desinfektion erfolgt dabei zweckmäßig mittels UV-Strahlung oder Gamma-Strahlung, wodurch Keime abgetötet und organische Verbindungen, z.B. Medikamente, zerstört werden.

Weiterhin besteht die Möglichkeit, den Harn-Speicherbehälter 31 über eine Luftleitung 36 zu belüften, um innerhalb des Harnspeichers eine Oxidation und/oder zusätzliche Desinfektion des Harns zu erreichen. Die hierfür eingesetzte Luft wird vorzugsweise der Abluft der Kot-Trocknungsvorrichtung 22 entnommen und außerdem vorzugsweise durch die Desinfektionsvorrichtung 35 geleitet. Wenn die Desinfektionsvorrichtung mit UV-Strahlung arbeitet, entsteht in der desinfizierten Luft zwangsläufig Ozon, das nach seinem Einblasen in den Harn im Harnspeicher 31 oxidierend und desinfizierend wirkt.

Dem Harnspeicher 31 ist eine Kläranlage 32, z.B. eine Mehrkammer-Anlage nachgeschaltet. Auch für diese Kläranlage 32 ist eine gleichmäßige Beschickung mit Harn vorteilhaft für die Funktion, wobei der Harnspeicher 31 hier als Puffer wirkt. Bei passend anfallender Harnmenge aus dem Stall 10 kann der Harn auch unmittelbar zur Kläranlage 32 geführt werden. In der Kläranlage 32 setzen sich noch im Harn enthaltene Feststoffe ab und/oder werden biologisch abgebaut. Die in der Kläranlage 32 abgesetzten Feststoffe können über eine Feststoff-Abführleitung 37 abgezogen und der Kot-Trocknungsvorrichtung 22 zugeführt werden, wo sie zusammen mit dem frischen Kot getrocknet werden. Die die Kläranlage 32 verlassene Flüssigkeit ist soweit gereinigt, daß sie über eine Leitung 38 abgezogen und zur Bewässerung mit leichter Düngung beispielsweise von Feldern verwendet werden kann, ohne daß dadurch Schadstoffe in die Luft oder den Boden gelangen.

Alternativ oder parallel kann die die Kläranlage 32 verlassende Flüssigkeit einem nachgeschalteten Verdampfer 33 zugeführt werden, in dem die Flüssigkeit verdampft wird und aus dem außerdem die nach dem Verdampfen noch verbleibende Festsubstanz ausgegeben wird. Diese Festsubstanz kann, ebenso wie die abgesetzten Feststoffe aus der Kläranlage 32, über eine Leitung 37' der Kot-Trocknungsvorrichtung 22 zur Trocknung zugeführt werden. Alternativ kann die Festsubstanz auch in der am Ausgang des Verdampfers 33 anfallenden Form abgezogen und einer Verwendung, z.B. als Dünger, zugeführt werden. Die den Verdampfer 33 verlassende Abluft wird zweckmäßig durch einen Filter 34 geführt, wobei auch dieser Filter zweckmäßig ein Biomasse- und/oder Aktivkohlefilter ist. Auch besteht die Möglichkeit, die beiden Filter 23 und 34 zu einem einzigen, entsprechend größeren Filter zusammenzufassen.

Sowohl für die Kot-Trocknungsvorrichtung 22 als auch für den Verdampfer 33 wird Wärmeenergie benötigt. Diese Wärmeenergie wird zweckmäßig aus der warmen Stall-Abluft, die durch einen Abluftkanal 13 aus dem Stall 10 abgezogen wird, gewonnen. Die Abluft kann dabei je nach Konstruktion von Trocknungsvorrichtung und Verdampfer unmittelbar oder nach Durchlaufen eines Entfeuchters oder nach Wärmetausch in einen Wärmetauscher genutzt werden. Sollte die aus der Abluft gewinnbare Wärmeenergie für die genannten Zwecke nicht ausreichen, muß Wärmeenergie zusätzlich erzeugt und zugeführt werden, wobei hier vorzugsweise die Wärmeenergie mittels Verbrennung von getrocknetem Kot erzeugt wird. Selbstverständlich sind auch andere Energiequellen, die bekannt sind, einsetzbar.

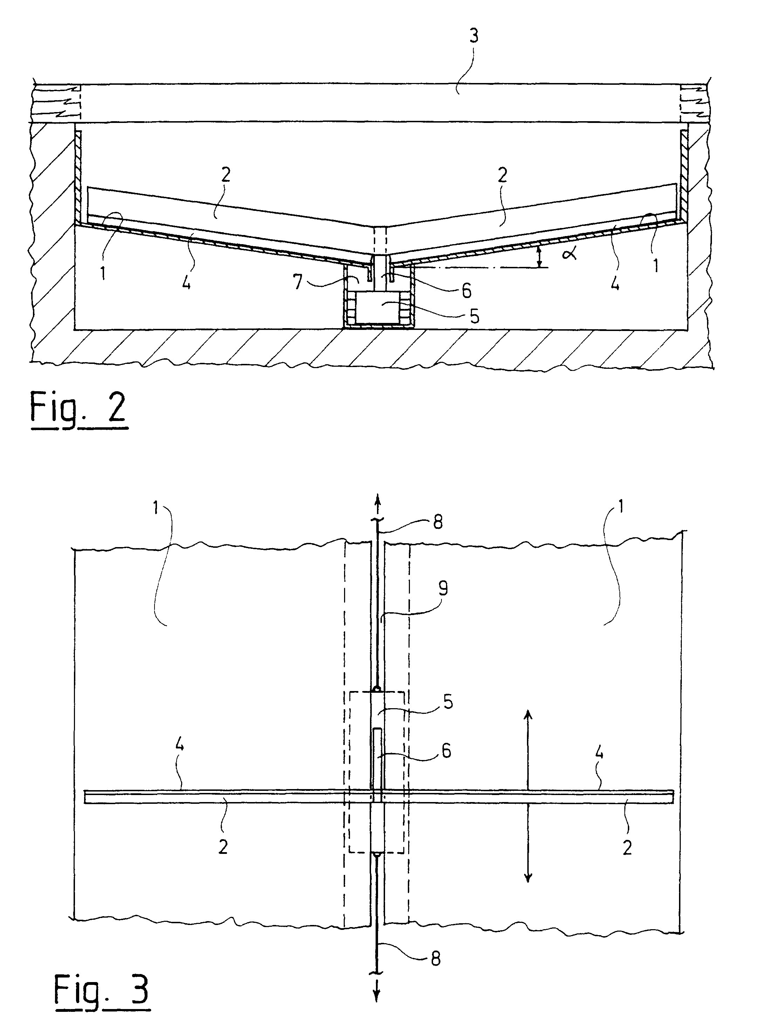

Für ein gutes Funktionieren des Verfahrens ist eine möglichst weitgehende Trennung der von den im Stall 10 gehaltenen Tieren abgesetzten Exkremente in Harn einerseits und Kot andererseits wesentlich. Ein Beispiel für eine wirksame Trennvorrichtung ist in den Figuren 2 und 3 dargestellt.

Figur 2 zeigt in einem Teil-Vertikalschnitt einen Ausschnitt aus einem Stall, dessen Bodenfläche teilweise durch einen Spaltenboden 3 gebildet ist. Unterhalb des Spaltenbodens 3 befindet sich ein Unterflurkanal, in den eine Absetzfläche 1 eingebaut ist. Die Absetzfläche 1 ist symmetrisch zu einer Mittelachse aufgebaut und besitzt ein jeweils von außen zur Mitte hin nach unten weisendes Gefälle. Der Winkel α dieses Gefälles beträgt im dargestellten Ausführungsbeispiel etwa 8°; wichtig ist bei der Wahl dieses Winkels α, daß einerseits der auf die Absetzfläche 1 auftreffende Harn unter Schwerkraftwirkung das Gefälle hinunter fließt und daß andererseits auf die Absetzfläche 1 fallender Kot auf dieser liegen bleibt, ohne nach unten zu rutschen.

In der Längsmitte der Absetzfläche 1 verläuft ein Harn-Sammelkanal 7, in den der Harn von der Absetzfläche 1 unter Schwerkraftwirkung einfließt. Der Harn-Sammelkanal 7 führt dann, wie anhand von Figur 1 erläutert, aus dem Stall heraus.

Weiterhin zeigt die Figur 2 einen Kotschieber 2, der aus zwei die Absetzfläche 1 überstreichenden Flügeln besteht, die an ihrer Unterkante mit einer elastischen Abstreifleiste 4, z.B. aus Gummi, versehen sind. Der Schieber 2 ist in seiner Mitte nach unten hin mittels eines Verbindungsstücks 6 mit einem Führungselement 5 verbunden, das im Inneren des Harn-Sammelkanals 7 geführt ist. Mittels eines in Figur 2 nicht sichtbaren Zugmittels ist das Führungselement 5 in Längsrichtung des Sammelkanals 7 in beide Richtungen bewegbar, wodurch gleichzeitig der Schieber 2 entsprechend bewegt wird. Bei seiner Bewegung über die Absetzfläche 1 schiebt der Schieber 2 den abgesetzten Kot vor sich her zum einen oder zu beiden Enden der Absetzfläche 1, von wo eine Abförderung des Kots nach außerhalb des Stalls erfolgt, wie in Figur 1 beschrieben. Dabei wird dafür gesorgt, daß der Kot nicht in das Innere des Harn-Sammelkanals 7 fällt.

Figur 3 zeigt besonders deutlich die Konstruktion des Schiebers 2 sowie die Mittel zu dessen Führung und Bewegung. Der Schieber 2 verläuft quer zur Längsrichtung der Absetzfläche 1 und ist in Richtung des Doppelpfeils hin und her verfahrbar. Das Führungselement 5 liegt im Inneren des Harn-Sammelkanals 7, der nach oben hin weitestgehend abgedeckt ist und nur über einen relativ schmalen Einlaufspalt 9 mit der Absetzfläche 1 in Verbindung steht. Durch diesen Einlaufspalt 9 verläuft das Verbindungsstück 6 zwischen dem Führungselement 5 und dem Schieber 2 und verbindet diese beiden Teile miteinander. Außerdem ist in Figur 3 nun das Zugmittel 8 erkennbar, das beispielsweise eine Kette oder ein Seil ist und das an der Vorderseite und an der Rückseite des Führungselements 5 befestigt ist. Das Zugmittel 8 verläuft über die gesamte Länge des Sammelkanals 7 und ist an hier nicht sichtbarer Stelle zurückgeführt, um einen geschlossenen Strang zu bilden. An einer außerhalb des Kanals 7 liegenden Stelle ist das Zugmittel 8 antreibbar, beispielsweise mittels eines motorisch drehantreibbaren Kettenrades oder einer Seilscheibe, um die gewünschte Bewegung des Schiebers 2 zu erzeugen.

Wie die Figuren 1 bis 3 zeigen, ist auch die Nachrüstung eines schon vorhandenen Stalls 10 mit den für die Durchführung des Verfahrens nötigen Elementen und Vorrichtungen problemlos möglich. Insbesondere Figur 2 zeigt, daß der Raum, in dem die Absetzfläche 1 mit dem Schieber 2 angeordnet ist, ein herkömmlicher und schon vorhandener Güllekeller sein kann. Die Umbauarbeiten innerhalb des Stalls sind dadurch auf ein relativ geringes Maß beschränkt. Die weiteren Komponenten der Einrichtung zur Durchführung des Verfahrens sind zweckmäßig außerhalb des Stalls 10 in einem separaten Gebäude und/oder im Freien angeordnet und installiert.

## Patentansprüche

1. Verfahren zur Entsorgung von aus Kot und Harn bestehenden Exkrementen von in einem Stall (10) gehaltenen Tieren, insbesondere Schweine, wobei im Stall (10) eine Trennung von Kot und Harn erfolgt, wobei Kot und Harn getrennt voneinander aus dem Stall (10) abgeführt werden und wobei Kot und Harn getrennt voneinander jeweils einer eigenen Weiterbehandlung unterzogen werden oder jeweils gelagert und einer eigenen Weiterbehandlung unterzogen werden, wobei die Abführung von Kot und Harn aus dem Stall und deren Lagerung oder Weiterbehandlung in frischem Zustand vor Beginn einer Zersetzung erfolgt und wobei die Kot-Weiterbehandlung eine Oberflächenvergrößerung und Trocknung des Kots umfaßt,
**dadurch gekennzeichnet,**
**daß** die Trocknung des Kots auf einen eine Zersetzung unterbindenden Feuchtegehalt erfolgt, bei dem der Kot lager- und transportfähig ist.

2. Verfahren nach Anspruch 1, **dadurch gekennzeichnet, daß** die Trocknung des Kots zunächst nur bis zu einem Feuchtegehalt zwischen etwa 10 und 25 Gew.-% erfolgt und daß dann der Kot unter weiterer Feuchtereduzierung zu Preßlingen mit einem eine Zersetzung unterbindenden Rest-Feuchtegehalt gepreßt wird.

3. Verfahren nach Anspruch 1 oder 2, **dadurch gekennzeichnet, daß** die Trennung von Kot und Harn erfolgt, indem von einer Exkremente-Absetzfläche (1) der Harn über ein Absetzflächen-Gefälle in einen Harn-Sammelkanal (7) geleitet wird und der Kot in einer von der Gefällerichtung abweichenden Richtung und unter Fernhaltung vom Harn-Sammelkanal (7) mechanisch abgefördert wird, wobei das Absetzflächen-Gefälle maximal so groß ist, daß der Kot nach dem Absetzen sicher auf der Absetzfläche (1) liegen bleibt.

4. Verfahren nach Anspruch 2 oder 3, **dadurch gekennzeichnet, daß** der getrocknete Kot beim Pressen zu Preßlingen in zweckentsprechender Größe gepreßt, vorzugsweise pelletiert oder brikettiert, wird.

5. Verfahren nach einem der Ansprüche 1 bis 4, **dadurch gekennzeichnet, daß** der Kot vor dem Trocknen oder vor oder nach dem Pressen bedarfsweise mit einem trockenen, pulverförmigen Entkeimungsmittel versetzt oder umhüllt wird.

6. Verfahren nach Anspruch 4 oder 5, **dadurch gekennzeichnet, daß** die Kot-Preßlinge als Dünger oder als Brennstoff eingesetzt werden.

7. Verfahren nach einem der vorhergehenden Ansprüche, **dadurch gekennzeichnet, daß** der Harn nach seiner Abführung aus dem Stall (10) unbehandelt oder nach einer Weiterbehandlung zur Bewässerung mit einem leichten Düngeeffekt eingesetzt wird.

8. Verfahren nach einem der vorhergehenden Ansprüche, **dadurch gekennzeichnet, daß** die Weiterbehandlung des Harns durch Oxidation und/oder Desinfektion erfolgt.

9. Verfahren nach einem der vorhergehenden Ansprüche, **dadurch gekennzeichnet, daß** die Weiterbehandlung des Harns durch eine ein- oder mehrstufige mechanische oder mechanisch-biologische Klärung erfolgt.

10. Verfahren nach einem der vorhergehenden Ansprüche, **dadurch gekennzeichnet, daß** die Weiterbehandlung des Harns durch Verdampfen seines Flüssigkeitsanteils und ggf. Trocknen der verbleibenden Festsubstanz erfolgt.

11. Verfahren nach einem der vorhergehenden Ansprüche, **dadurch gekennzeichnet, daß** zur Trocknung des Kots und/oder zur Verdampfung des Flüssigkeitsanteils des Harns und/oder für eine Vorwärmung von dem Stall (10) zuzuführender Frischluft Wärmeenergie aus durch Tier-Körperwärme erwärmter Stall-Abluft verwendet wird.

12. Verfahren nach Anspruch 11, **dadurch gekennzeichnet, daß** bei der Trocknung und/oder bei der Verdampfung anfallende Abluft durch mindestens ein Gerüche und/oder Stäube verminderndes oder beseitigendes Filter (23, 34) geleitet und in die Atmosphäre entlassen wird.

13. Verfahren nach Anspruch 12, **dadurch gekennzeichnet, daß** zumindest ein Teilstrom der Stall-Abluft vor oder nach ihrer Verwendung zur Trocknung des Kots und/oder zur Verdampfung des Flüssigkeitsanteils des Harns desinfiziert und dann unmittelbar zur Belüftung des Harns zwecks dessen Oxidation und/oder Desinfektion eingesetzt wird.

14. Verfahren nach einem der Ansprüche 8 bis 13, **dadurch gekennzeichnet, daß** die Desinfektion durch Bestrahlung des Harns und/oder der Stall-Abluft mit UV-Strahlung oder Gamma-Strahlung erfolgt.

15. Einrichtung zur Durchführung des Verfahrens nach einem der Ansprüche 1 bis 14, wobei die Einrichtung einen Stall (10) umfaßt, der eine Trenneinrichtung (1, 2, 7) für eine Trennung von abgesetzten. Exkrementen nach Harn und Kot aufweist, wobei getrennte, aus dem Stall (10) herausführende Abführwege (30, 30'; 20) für eine gesonderte Abführung des Harns und des Kots und getrennte Weiterbehandlungseinrichtungen (32, 33, 35; 22, 24) oder getrennte Lager- und Weiterbehandlungseinrichtungen (32, 33, 35; 22, 24) für den Harn und für den Kot vorhanden sind, wobei über die Abführwege (30, 30'; 20) Harn und Kot in frischem Zustand vor Beginn einer Zersetzung aus dem Stall (10) abführbar und den Lager- oder Weiterbehandlungseinrichtungen (32, 33, 35; 22, 24) zuführbar sind und wobei die Kot-Weiterbehandlungseinrichtung eine Vorrichtung zur Oberflächenvergrößerung und Trocknung des Kots umfaßt,
**dadurch gekennzeichnet,**
**daß** die Vorrichtung zur Trocknung des Kots eine den Kot auf einen eine Zersetzung unterbindenden Feuchtegehalt, bei dem der Kot lager- und transportfähig ist, trocknende Trocknungsvorrichtung ist.

16. Einrichtung nach Anspruch 15, **dadurch gekennzeichnet, daß** die Kot-Weiterbehandlungseinrichtung weiterhin eine Preßvorrichtung zur Erzeugung von Kot-Preßlingen mit einem eine Zersetzung unterbindenden Rest-Feuchtegehalt aus in der Trocknungsvorrichtung zunächst nur auf einen Feuchtegehalt zwischen etwa 10 und 25 Gew.-% getrocknetem Kot umfaßt.

17. Einrichtung nach Anspruch 15 oder 16, **dadurch gekennzeichnet, daß** der Stall (10) mindestens eine Exkremente-Absetzfläche (1) mit Gefälle aufweist, in deren tiefstem Bereich wenigstens ein Harn-Sammelkanal (7) verläuft, wobei das Gefälle maximal so groß ist, daß der Kot nach dem Absetzen sicher auf der Absetzfläche (1) liegen bleibt, und daß die Absetzfläche (1) mit einer mechanischen Kot-Abfördervorrichtung (2) ausgestattet ist, mit der der Kot in einer von der Gefällerichtung abweichenden Förderrichtung und unter Fernhaltung vom Harn-Sammelkanal (7) abförderbar ist.

18. Einrichtung nach Anspruch 17, **dadurch gekennzeichnet, daß** der Stall (10) zumindest über einen Teil seiner Bodenfläche mit einem Spaltenboden (3) ausgeführt ist, daß die Exkremente-Absetzfläche (1) die Grundfläche eines unter dem Spaltenboden (3) angeordneten Kanals ist und daß die Spalten des Spaltenbodens (3) und die Richtung des Gefälles im wesentlichen parallel zueinander verlaufen.

19. Einrichtung nach Anspruch 17 oder 18, **dadurch gekennzeichnet, daß** die Kot-Abfördervorrichtung durch einen vorzugsweise parallel zur Harn-Sammelrinne (7) verfahrbaren Kot-Schieber (2) gebildet ist.

20. Einrichtung nach Anspruch 15, 17 oder 18, **dadurch gekennzeichnet, daß** zur Bildung der Kot-Abfördervorrichtung die Absetzfläche (1) als vorzugsweise parallel oder quer zum Harn-Sammelkanal (7) verfahrbarer Förderer in Form eines oder mehrerer flexibler Förderbänder oder gelenkiger Plattenbänder ausgeführt ist, wobei die Bänder eine geschlossene oder durchbrochene Oberfläche aufweisen.

21. Einrichtung nach einem der Ansprüche 16 bis 20, **dadurch gekennzeichnet, daß** die Preßvorrichtung eine Pelletiervorrichtung (24) oder eine Brikettiervorrichtung ist.

22. Einrichtung nach einem der Ansprüche 15 bis 21, **dadurch gekennzeichnet, daß** der Trocknungsvorrichtung (22) eine Misch- oder Bestäubungsvorrichtung voroder nachgeschaltet ist, mit der der Kot bedarfsweise mit einem trockenen, pulverförmigen Entkeimungsmittel versetzbar oder bestäubbar ist.

23. Einrichtung nach einem der Ansprüche 15 bis 22, **dadurch gekennzeichnet, daß** die Weiterbehandlungseinrichtung für den Harn eine Harn-Oxidations- und/oder Harn-Desinfektionsvorrichtung (35) umfaßt.

24. Einrichtung nach einem der Ansprüche 15 bis 23, **dadurch gekennzeichnet, daß** die Weiterbehandlungseinrichtung für den Harn eine ein- oder mehrstufige mechanische oder mechanisch-biologische Kläranlage (32) umfaßt.

25. Einrichtung nach einem der Ansprüche 15 bis 24, **dadurch gekennzeichnet, daß** die Weiterbehandlungseinrichtung für den Harn eine Verdampfungs- und ggf. Trocknungsvorrichtung (33) umfaßt, in der der Flüssigkeitsanteil des Harns verdampfbar und ggf. die verbleibende Festsubstanz trockenbar ist.

26. Einrichtung nach einem der Ansprüche 15 bis 25, **dadurch gekennzeichnet, daß** die Trocknungsvorrichtung (22) für den Kot und/oder die Verdampfungsvorrichtung (33) für den Flüssigkeitsanteil des Harns und/oder ein Wärmetauscher für eine Vorwärmung von dem Stall (10) zuzuführender Frischluft mit Wärmeenergie aus durch Tier-Körperwärme erwärmter Stall-Abluft betreibbar sind/ist.

27. Einrichtung nach einem der Ansprüche 15 bis 26, **dadurch gekennzeichnet, daß** der Trocknungsvorrichtung (22) und/oder der Verdampfungsvorrichtung (33) je ein einzelner oder ein gemeinsamer Abluftfilter (23, 34), vorzugsweise Biomasse- oder Aktivkohle-Filter, nachgeschaltet ist.

28. Einrichtung nach Anspruch 26 oder 27, **dadurch gekennzeichnet, daß** diese eine Abluft-Desinfektionsvorrichtung (35) umfaßt, in der zumindest ein Teilstrom der Stall-Abluft vor oder nach ihrer Verwendung in der Trocknungsvorrichtung (22) und/oder in der Verdampfungsvorrichtung (33) desinfizierbar ist und von der dann der Teilstrom unmittelbar zur Belüftung des Harns zwecks dessen Oxidation und/oder Desinfektion dem Harn-Speicherbehälter (31) und/oder der Kläranlage (32) zuführbar ist.

29. Einrichtung nach einem der Ansprüche 23 bis 28, **dadurch gekennzeichnet, daß** die Harn- und/oder die Abluft-Desinfektionsvorrichtung (35) mindestens eine Quelle für UV-Strahlung oder für Gamma-Strahlung umfaßt, mit der der Harn und/oder die Abluft bestrahlbar sind/ist.

## Claims

1. Procedure for the disposal of excrements consisting of faeces and urine of animals, in particular of pigs, kept in a stable (10), wherein said excrements are separated into faeces and urine in stable (10), wherein faeces and urine are removed separately from stable (10) and subjected to separate further treatment or stored separately and subsequently subjected to separate further treatment, wherein faeces and urine are removed from the stable and then stored or subjected to further treatment in a fresh condition prior to the onset of degradation, and wherein the further faeces treatment includes enlargement of the surface and drying of the faeces,
**characterised in that**
the faeces is dried to a moisture content that prevents degradation and renders the faeces fit for both storage and transport.

2. Procedure according to Claim 1, **characterised in that** the faeces is dried initially to a moisture content between approx. 10 and 25 wt-% and compacted subsequently under further drying to pellets with a residual moisture content that prevents degradation.

3. Procedure according to Claim 1 or 2, **characterised in that** faeces and urine are separated by the urine being guided from an excrement dropping area (1) to a urine collector channel (7) through the effect of a dropping area slope, whereas the faeces is mechanically removed in a direction deviating from the direction of the slope and kept away from the urine collector channel (7), wherein the dropping area slope is only large enough to ensure that the dropped faeces safely rests on the dropping area (1).

4. Procedure according to Claim 2 or 3, **characterised in that** the dried faeces is compacted to pellets of a suitable size for its further use, preferably by pelleting or briquetting.

5. Procedure according to anyone of the Claims 1 through 4, **characterised in that**, in case of need, a dry, powder-like de-germination agent is added to or used to surround the faeces eitherprior to drying or prior to or after compaction.

6. Procedure according to Claim 4 or 5, **characterised in that** the faeces pellets are utilised as fertiliser or fuel.

7. Procedure according to anyone of the preceding claims, **characterised in that** the urine removed from the stable (10) is utilised for irrigation with a mild fertilising effect either with or without any further treatment of the urine.

8. Procedure according to anyone of the preceding claims, **characterised in that** the further treatment of the urine comprises the steps of oxidation and/or disinfection.

9. Procedure according to anyone of the preceding claims, **characterised in that** the further treatment of the urine comprises single or multiple steps of mechanical or mechanical-biological clarification.

10. Procedure according to anyone of the preceding claims, **characterised in that** the further treatment of the urine comprises the evaporation of the liquid fraction and the drying, if required, of the residual solid substance.

11. Procedure according to anyone of the preceding claims, **characterised in that** the thermal energy required for drying of the faeces and/or evaporation of the liquid fraction of the urine and/or pre-heating of fresh air supplied to the stable (10) is derived from outgoing air of the stable warmed by the body heat of animal.

12. Procedure according to Claim 11, **characterised in that** the outgoing air generated during the drying and/or evaporation is guided through at least one smell- and/or dust-reducing or -removing filter(s) (23, 34) and then released into the atmosphere.

13. Procedure according to Claim 12, **characterised in that** at least a partial flow of the outgoing stable air, before or after its use for drying of the faeces and/or evaporation of the liquid fraction of the urine, is disinfected and then immediately used for ventilation of the urine for the purpose of urine oxidation and/or disinfection.

14. Procedure according to anyone of the Claims 8 through 13, **characterised in that** the disinfection comprises irradiation of the urine and/or outgoing stable air with UV radiation or gamma radiation.

15. Facility for execution of the procedure according to anyone of the Claims 1 through 14, wherein the facility comprises a stable (10) with a separating facility (1, 2, 7) for the separation of dropped excrements into faeces and urine components, wherein separate exit pathways (30, 30'; 20) leading out of the stable (10) exist for the separate removal of urine and faeces, and separate facilities for further treatment (32, 33, 35; 22, 24) or separate facilities for storage and further treatment (32, 33, 35; 22, 24) of faeces and urine exist, wherein the removal pathways (30, 30'; 20) provide for the removal from the stable (10) of the faeces and urine in a fresh condition prior to the onset of degradation and supply to the facilities for storage and further treatment (32, 33, 35; 22, 24), and wherein the facility for further faeces treatment comprises a facility for surface enlargement and drying of the faeces,
**characterised in that**
the faeces drying facility consists of a drying facility drying the faeces to a moisture content that prevents degradation and renders the faeces fit for both storage and transport.

16. Facility according to Claim 15, **characterised in that** the facility for further faeces treatment also comprises a compaction facility for the production of faeces pellets with a degradation-preventing residual moisture content from faeces initially dried to a moisture content between only approx. 10 and 25 % wt-% in the drying facility.

17. Facility according to Claim 15 or 16, **characterised in that** the stable (10) comprises at least one sloping excrement dropping area (1) with at least one urine collector channel (7) in its lowest portion, wherein the dropping area slope is only large enough to ensure that the dropped faeces safely remains on the dropping area (1), and **in that** the dropping area (1) is equipped with a mechanical faeces removal facility (2) allowing the faeces to be removed in a direction deviating from the direction of the slope and kept away from the urine collector channel (7).

18. Facility according to Claim 17, **characterised in that** at least part of the floor area of the stable (10) consists of a slatted floor (3), and **in that** the excrement dropping area (1) comprises the base of a channel arranged below the slatted floor (3), and **in that** the gaps in the slatted floor (3) extend in a direction that is essentially parallel to the slope.

19. Facility according to Claim 17 or 18, **characterised in that** the faeces removal facility comprises a faeces pusher (2) that is preferably movable in a direction parallel to the urine collector channel (7).

20. Facility according to anyone of the Claims 15, 17 or 18, **characterised in that** the faeces removal facility is constructed such that the dropping area (1) is designed as a movable conveyor, preferably being movable in a parallel or transverse direction with respect to the urine collector channel (7), in the form of one or several flexible conveyor belts or linked slat conveyor, wherein the belts or slats have a continuous or perforated surface.

21. Facility according to anyone of the Claims 16 through 20, **characterised in that** the compaction facility comprises a pelleting facility (24) or briquetting facility.

22. Facility according to anyone of the Claims 15 through 21, **characterised in that** a mixing or dusting facility is arranged up- or downstream from the drying facility (22), said mixing or dusting facility providing for the addition of or dusting of the faeces with a dry, powder-like de-germination agent.

23. Facility according to anyone of the Claims 15 through 22, **characterised in that** the facility for further urine treatment comprises a urine oxidation and/or urine disinfection facility (35).

24. Facility according to anyone of the Claims 15 through 23, **characterised in that** the facility for further urine treatment comprises a single- or multiple-step mechanical or mechanical-biological clarification facility (32).

25. Facility according to anyone of the Claims 15 through 24, **characterised in that** the facility for further urine treatment comprises an evaporation and, if required, a drying facility (33) for evaporation of the liquid fraction of the urine and, if required, drying of the residual solid substance.

26. Facility according to anyone of the Claims 15 through 25, **characterised in that** the faeces-drying facility (22) and/or the evaporation facility (33) for the liquid fraction of the urine and/or a heat exchanger for pre-heating of the fresh air supplied to the stable (10) is/are operable with thermal energy derived from outgoing stable air heated by the body heat of animals.

27. Facility according to anyone of the Claims 15 through 26, **characterised in that** a separate outgoing air filter each or a common outgoing air filter (23, 34), preferably a bio-mass or activated carbon filter, is arranged downstream from the drying facility (22) and/or evaporation facility (33).

28. Facility according to Claim 26 or 27, **characterised in that** the facility comprises an outgoing air disinfection facility (35), in which at least a partial flow of the outgoing stable air before or after the use of the stable air in the drying facility (22) and/or evaporation facility (33) can be disinfected and immediately supplied to the urine collector container (31) and/or clarification facility (32) for ventilation of the urine for the purpose of urine oxidation and/or disinfection.

29. Facility according to anyone of the Claims 23 through 28, **characterised in that** the urine and/or outgoing air disinfection facility (35) comprises at least one source of UV radiation or gamma radiation for irradiation of the urine and/or outgoing air.

## Revendications

1. Procédé permettant d'évacuer les excréments, se composant de crotte et d'urine, d'animaux en étable (10), en particulier de porcs, dans lequel la crotte et l'urine sont séparées dans l'étable (10), dans lequel la crotte et l'urine sont évacuées de l'étable séparément et dans lequel la crotte et l'urine sont soumises à un post-traitement individuel ou sont séparément stockées et soumises à un post-traitement individuel, procédé au cours duquel la crotte et l'urine sont évacuées de l'étable, stockées ou post-traitées à l'état frais avant le début d'une éventuelle décomposition, et où le processus de post-traitement de la crotte comprend un élargissement de surface et le séchage de la crotte,
**caractérisé par le fait que**
la crotte est séchée jusqu'à obtention d'un taux d'humidité empêchant une éventuelle décomposition et permettant le stockage et le transport de la crotte.

2. Prodédé conformément à la revendication 1, **caractérisé par le fait que** la crotte est tout d'abord séchée jusqu'à un taux d'humidité d'environ 10 à 25 % en poids et, que la crotte est alors comprimée, tout en étant soumise à une réduction supplémentaire de son taux d'humidité, en pièces pressées avec un taux d'humidité résiduel empêchant la décomposition.

3. Procédé conformément à la revendication 1 ou 2, **caractérisé par le fait que** la séparation de la crotte et de l'urine est réalisée par évacuation de l'urine depuis une surface de décantation d'excréments (1) via une déclivité dans un canal collecteur d'urine (7) et transport mécanique de la crotte dans le sens opposé au sens de déclivité, ce séparément du canal collecteur d'urine (7), la grandeur maximale de la déclivité de la surface de décantation étant choisie de manière à ce que la crotte se dépose de façon sûre sur la surface de décantation (1) après la décantation.

4. Procédé conformément à la revendication 2 ou 3, **caractérisé par le fait que**, lors de la compression, la crotte séchée est comprimée en pièces pressées de taille opportune, de préférence en boulets ou en briquettes.

5. Procédé conformément à l'une des revendications 1 à 4, **caractérisé par le fait que**, avant le séchage ou avant et après la compression, la crotte est, en fonction des besoins, mélangée avec ou enveloppée d'un agent stérilisant pulvérulent sec.

6. Procédé conformément à la revendication 4 ou 5, **caractérisé par le fait que** les comprimés de crotte sont utilisés comme engrais ou combustibles.

7. Procédé conformément à l'une des revendications précédentes, **caractérisé par le fait que**, après son évacuation de l'étable (10), l'urine est utilisée sans traitement ou après un post-traitement pour l'irrigation avec un léger effet fertilisant.

8. Procédé conformément à l'une des revendications précédentes, **caractérisé par le fait que** le post-traitement de l'urine se fait par oxydation et/ou désinfection.

9. Procédé conformément à l'une des revendications précédentes, **caractérisé par le fait que** le post-traitement de l'urine se fait par épuration mécanique ou mécano-biologique en un ou plusieurs stades.

10. Procédé conformément à l'une des revendications précédentes, **caractérisé par le fait que** le post-traitement de l'urine se fait par évaporation du liquide qu'elle contient et, éventuellement, séchage de la substance solide résiduelle.

11. Procédé conformément à l'une des revendications précédentes, **caractérisé par le fait que**, pour le séchage de la crotte et/ou l'évaporation du liquide que contient l'urine et/ou le préchauffage de l'air frais à conduire dans l'étable (10), on utilise de l'énergie calorifique résultant de l'air d'échappement d'étable échauffé par la chaleur corporelle des animaux.

12. Procédé conformément à la revendication 11, **caractérisé par le fait que** l'air d'échappement résultant du séchage et/ou de l'évaporation est conduit au moins à travers un filtre (23, 34) réduisant ou éliminant les odeurs et/ou poussières puis évacué dans l'atmosphère.

13. Procédé conformément à la revendication 12, **caractérisé par le fait que** au moins un courant partiel de l'air d'échappement de l'étable est désinfecté avant ou après son utilisation pour le séchage de la crotte et/ou l'évaporation du liquide que contient l'urine, puis immédiatement utilisé pour l'aération de l'urine en vue de l'oxydation et/ou désinfection de cette dernière.

14. Procédé conformément à l'une des revendications 8 à 13, **caractérisé par le fait que** la désinfection est réalisée par irradiation de l'urine et/ou de l'air d'échappement de l'étable avec des rayons ultraviolets ou des rayons gamma.

15. Equipement permettant la réalisation du procédé conformément à l'une des revendications 1 à 14, l'équipement comprenant une étable (10) comportant une installation de séparation (1, 2, 7) pour la séparation des excréments décantés en urine et crotte, étant donné qu'il existe des voies d'évacuation (30 ; 30' ; 20) séparées partant de l'étable (10) et permettant l'évacuation séparée de l'urine et de la crotte, et des installations de post-traitement (32, 33, 35 ; 22, 24) séparées ou des installations de stockage et de post-traitement (32, 33, 35 ; 22, 24) séparées pour l'urine et la crotte, l'urine et la crotte fraîches pouvant être évacuées de l'étable (10) par l'intermédiaire des voies d'évacuation avant le début d'une éventuelle décomposition et alimentées dans les installations de stockage et de post-traitement (32, 33, 35 ; 22, 24), l'installation de post-traitement de crotte comprenant un dispositif d'élargissement de surface et de séchage de la crotte,
**caractérisé par le fait que**
le dispositif de séchage de la crotte est un dispositif de séchage permettant de sécher la crotte jusqu'à un taux d'humidité empêchant une éventuelle décomposition et auquel la crotte peut être stockée et transportée.

16. Equipement conformément à la revendication 15, **caractérisé par le fait que** l'installation de post-traitement de crotte comprend également un dispositif de compression pour la production, à partir de crotte séchée tout d'abord dans le dispositif de séchage jusqu'à un taux d'humidité d'environ 10 à 25 % en poids, de comprimés de crotte dont le taux d'humidité résiduelle empêche une éventuelle décomposition.

17. Equipement conformément à la revendication 15 ou 16, **caractérisé par le fait que** l'étable (10) comporte au moins une surface de décantation d'excréments (1) avec déclivité dans la zone la plus profonde de laquelle il existe au moins un canal collecteur d'urine (7), la grandeur maximale de la déclivité de la surface de décantation étant choisie de manière à ce que la crotte se dépose de façon sûre sur la surface de décantation (1) après la décantation et, que la surface de décantation (1) est équipée d'un dispositif mécanique de transport de crotte (2) permettant de transporter la crotte dans le sens opposé de la déclivité, et ce séparément du canal collecteur d'urine (7).

18. Equipement conformément à la revendication 17, **caractérisé par le fait que** l'étable (10) comporte au moins sur une partie de sa surface une grille à lisier (3), que la surface de décantation d'excréments (1) est la surface de base d'un canal agencé au-dessous de la grille à lisier (3) et, que les fentes de la grille à lisier (3) sont principalement orientées parallèlement au sens de déclivité.

19. Equipement conformément à la revendication 17 ou 18, **caractérisé par le fait que** le dispositif de transport de crotte est constitué par un coulisseau à crotte (2) mobile se déplaçant de préférence parallèlement au canal collecteur d'urine (7).

20. Equipement conformément à la revendication 15, 17 ou 18, **caractérisé par le fait que**, afin de réaliser le dispositif de transport de crotte, la surface de décantation (1) est conçue comme convoyeur mobile se déplaçant parallèlement, de préférence, ou transversalement au canal collecteur d'urine (7) sous forme d'une ou plusieurs bandes transporteuses flexibles ou de transporteurs à palettes articulés, les bandes formant une surface fermée ou ajourée.

21. Equipement conformément à l'une des revendications 16 à 20, **caractérisé par le fait que** le dispositif de compression est une presse à boulets (24) ou une presse à briquettes.

22. Equipement conformément à l'une des revendications 15 à 21, **caractérisé par le fait qu'**un dispositif de mélange ou de pulvérisation permettant de mélanger ou de pulvériser en cas de besoin la crotte avec un agent stérilisant pulvérulent sec est installé en amont ou en aval du dispositif de séchage (22).

23. Equipement conformément à l'une des revendications 15 à 22, **caractérisé par le fait que** l'installation de post-traitement de l'urine est un dispositif d'oxydation d'urine et/ou de désinfection d'urine (35).

24. Equipement conformément à l'une des revendications 15 à 23, **caractérisé par le fait que** l'installation de post-traitement de l'urine comprend une station d'épuration (32) mécanique ou mécano-biologique à un ou plusieurs étages.

25. Equipement conformément à l'une des revendications 15 à 24, **caractérisé par le fait que** l'installation de post-traitement de l'urine comprend un dispositif d'évaporation et, si nécessaire, de séchage (33) dans lequel le liquide que contient l'urine peut s'évaporer et, le cas échéant, la substance solide résiduelle séchée.

26. Equipement conformément à l'une des revendications 15 à 25, **caractérisé par le fait que** le dispositif de séchage (22) de crotte et/ou le dispositif d'évaporation (33) de la part de liquide de l'urine et/ou un échangeur thermique peut/peuvent être utilisé(s) pour le préchauffage de l'air frais à conduire dans l'étable (10) avec de l'énergie calorifique résultant de l'air d'échappement d'étable échauffé par la chaleur corporelle des animaux.

27. Equipement conformément à l'une des revendications 15 à 26, **caractérisé par le fait qu'**un filtre à air d'échappement (23, 34) individuel ou commun, de préférence un filtre à biomasse ou à charbon actif, est installé en aval du dispositif de séchage (22) de crotte et/ou du dispositif d'évaporation (33).

28. Equipement conformément à la revendication 26 ou 27, **caractérisé par le fait que** ce dernier comprend un dispositif de désinfection d'air d'échappement (35) dans lequel au moins un courant partiel de l'air d'échappement de l'étable peut être désinfecté avant ou après son utilisation dans le dispositif de séchage (22) et/ou le dispositif d'évaporation (33), et à partir duquel le courant partiel peut alors être directement tiré pour l'aération de l'urine en vue de son oxydation et/ou la désinfection du récipient collecteur d'urine (31) et/ou de la station d'épuration (32).

29. Equipement conformément à l'une des revendications 23 à 28, **caractérisé par le fait que** le dispositif de désinfection d'urine et/ou d'air d'échappement (35) comprend (comprennent) au moins une source de rayonnement ultraviolet ou de rayons gamma permettant d'irradier l'urine et/ou l'air d'échappement.
